# EUROPEAN PATENT SPECIFICATION

(11) **EP 3 665 021 B1**
(45) Date of publication and mention of the grant of the patent: **17.11.2021**
(21) Application number: 18765184.9
(22) Date of filing: 07.08.2018
(51) Int. Cl.: B60C 11/03, B60C 11/12

(54) **TYRE FOR VEHICLE WHEELS**
REIFEN FÜR FAHRZEUGRÄDER
PNEU POUR ROUES DE VÉHICULE

(30) Priority: 07.08.2017 IT 201700091396
(43) Date of publication of application: 17.06.2020
(60) Divisional application: 21201066.4
(73) Proprietor: Pirelli Tyre S.p.A., 20126 Milano (IT)
(72) Inventor: BELLO, Vito, 20900 Monza (MB) (IT); MONTESELLO, Stefano, 20126 Milano (IT); SPEZIARI, Diego, 20126 Milano (IT)
(74) Representative: Susanetto, Carlo
(86) International application number: PCT/IB2018/055934
(87) International publication number: WO 2019/030665

(56) References cited:
- EP-A1- 0 609 194
- EP-A2- 2 095 976
- WO-A1-2016/189418
- JP-A- 2013 023 191

## Description

The present invention concerns a tyre for vehicle wheels, in particular, a winter tyre.

A tyre generally comprises a carcass structure of a substantially toroidal shape around a rotational axis and includes at least one carcass ply provided with end flaps engaged with respective annular securing structures, known as beads.

In a position radially external to the carcass structure a belt structure is provided, comprising, in the case of car tyres, at least two radially overlapping strips of rubberised fabric provided with reinforcing cords, usually metallic, arranged in each strip parallel to each other but crossed respective to the cords of the adjacent strip, preferably symmetrically relative to the equatorial plane of the tyre.

Preferably, the belt structure further comprises, in a radially external position, at least on the ends of the underlying belt strips, a third layer of textile or metal cords, arranged circumferentially (at 0 degrees). A radially inner layer is further present in tubeless tyres, called "liner", which has waterproof characteristics to ensure the air-tightness of the tyre itself.

In a position radially external to the belt structure a tread band is applied, made of elastomeric material, on which a tread surface is defined that is designed to make contact with the road surface.

In order to ensure adequate road grip even on a wet road surface, the tyres have a tread band provided with grooves of various shapes and geometry that delimits portions of the tread bands, said blocks, intended to contact the ground.

The main function of the grooves is to allow for the evacuation of the water present between the surface of the tyre and the road surface at the moment of reciprocal contact, preventing the hydrostatic pressure resulting from the impact of the water against the advancing tyre from causing the partial lifting of the tyre from the road surface and the subsequent loss of control of the vehicle.

Moreover, in the case of winter tyres, small notches, called "sipes", are generally provided on the blocks of the tread band, extending from the tread surface of the tyre to the inside of the block. The function of the sipes is to offer additional gripping elements when driving on snowy surfaces and to retain a certain amount of snow, thus improving the grip on the road surface. The overall configuration of the tread band defined by the set of grooves and blocks forms the tread pattern.

The tread pattern may be not symmetrical relative to the equatorial plane of the tyre and may provide a differentiated configuration between the outer region of the tyre, intended to be facing outward when the tyre is mounted on the vehicle, and the opposite inner region of the tyre. In this way it is possible to configure each portion of the tread band in a more targeted manner in relation to the different stresses and requirements that may affect the outer and inner regions of the tread band respectively when traveling on different road surfaces (dry, wet and snow-covered).

A tyre having a tread pattern of the type briefly described above is called "asymmetrical". The Applicant has preliminarily observed that, in general, "asymmetrical" tyres are not "directional", i.e. they do not provide for rotation in a preferential direction of travel, whereby if the tyre is mounted on a right wheel of the vehicle, it is designed to rotate in one direction of rotation, while if the tyre is mounted on a left wheel of the vehicle, it is designed to rotate in the opposite direction of rotation.

The Applicant has verified that in an "asymmetrical" tyre the behaviour on the road can vary significantly when it is rotated in two different rotational directions.

The Applicant moreover noted that this distinction is particularly significant in the central region of the tread band, where generally the main transverse grooves are strongly slanted relative to the axial direction of the tyre.

The Applicant has further noted that the grooves affect the steering direction and stability characteristics of the tyre in relation to the direct tangential stresses perpendicular to the direction to which the grooves and the sipes are extended.

In particular, the Applicant has verified that the grooves provided in a circumferential direction affect the directionality and stability characteristics of the tyre in relation to the tangential stresses with a component parallel to the rotational axis of the tyre, for example, in the driving phases of the vehicle on a curve, while the grooves provided in the axial direction in turn affect the traction characteristics of the tyre in relation to the tangential stresses with a component parallel to the direction of travel, for example, during the acceleration and braking phases of the motor vehicle.

EP 2095976, under the name of the same Applicant, describes an asymmetrical tyre, upon which a tread band is provided, in a central region intended to be mounted on the inner side of the vehicle, a plurality of long ribs slanting relative to the circumferential direction. Such slanted ribs are delimited by respective pairs of main transverse grooves, which, in the inner shoulder region, are curved in a more axial direction.

Further examples of tyres according to the prior art are disclosed in EP 609194, JP 2013023191 and in WO 2016/189418.

The Applicant has observed that a succession of first transverse grooves, or their portions, slanted in the same direction relative to the circumferential direction may result in, at least locally, poorly balanced behaviour during traction and curve management. In particular, the slanted grooves on the tyre can determine an axial stress component, which, in turn, involves a traction imbalance of the tyre, with consequent lateral drift of the same, even when driving a straight line.

The Applicant has therefore realised that the local traction imbalance determined by the configuration of the first transverse grooves can be adequately compensated for by intersecting each first transverse groove with a second transverse groove slanted in the opposite direction. However, the Applicant has verified that this configuration, while achieving excellent results in terms of road behaviour, is not completely satisfactory in terms of noise.

To also improve this parameter, while at the same time maintaining the improvement achieved in terms of road behaviour, the Applicant has thus detected that, at least for some of them, the second transverse grooves can be subdivided into successive portions which, although kept substantially parallel to each other to balance the slant of the first transverse grooves, can be properly misaligned.

The Applicant has also perceived that the portion of second transverse grooves wherein such portions are kept substantially aligned and the fraction of second transverse grooves wherein such portions are not aligned must be adequately calibrated to optimise the effect of noise reduction and the balancing effect of slanted grooves.

Finally, the Applicant has found that a tyre comprising first transverse grooves intersected by second transverse grooves, wherein a defined maximum percentage of the second transverse grooves has the preceding and successive portions at the intersection with the respective transverse groove in substantial alignment, and wherein the remaining second transverse grooves have the preceding and successive portions at the intersection with the respective main transverse groove misaligned with each other, shows excellent parameters both in terms of noise and road behaviour.

The present invention relates to a tyre for vehicle wheels according to claim 1.

The tyre of the invention has significantly reduced noise levels and, in addition, improved road behaviour.

In addition, the first transverse grooves can be configured to fulfil some specific needs of the inner region of the tread band and, in particular, those related to driving on snowy ground.

The effect of the first transverse grooves and second transverse grooves is limited to the inner region of the tread band, characterising its functionality relative to the other regions of the tread band. In particular, the inner region of the tread band is particularly configured to give the tyre excellent performance on snowy ground.

It should be noted that it is expressly provided for that the third angle and the fourth angle may be equal to one another. In this case the first and second portions of the second transverse groove may become a single portion.

The term "equatorial plane" of the tyre means a plane perpendicular to the rotational axis of the tyre and which divides the tyre into two equal parts.

"Circumferential" direction means a direction generally oriented according to the rotational direction of the tyre, or, at most, slightly slanted (at most by about 5°) relative to the rotational direction of the tyre.

"Axial" direction means a direction substantially parallel to the rotational axis of the tyre, or, at most, slightly slanted (at most by about 5°) relative to said rotational axis of the tyre. The axial direction is generally perpendicular to the circumferential direction.

The term "effective width" referring to the tread band is defined as the width of the radially outermost portion of the tread band (edge to edge) intended to make contact with the ground. The "central region" of the tread band means a portion of the tread band extending circumferentially around an equatorial plane of said tyre for a width equal to at least 30% of the effective width of the tread band, preferably for a width between 40% and 75% of this effective width.

The central region can be extended symmetrically or not relative to the equatorial plane.

In particular, when on the tread band there are provided circumferential or almost circumferential grooves, the central region may be delimited on one or both sides, by one of said circumferential grooves.

By "shoulder regions" of the tread band, we mean the portions of the tread band extending circumferentially to the opposite sides of the central region in position axially external to the tread band.

Preferably, each shoulder region is extended by a width of at least 10% of the effective width of the tread band.

A shoulder region is called "internal" when it is intended to be facing the vehicle when the tyre is mounted on the vehicle, and is likewise called "external" when it is intended to be facing the outside of the vehicle when the tyre is mounted on the vehicle.

A tyre is called "asymmetrical" when its tread pattern is not symmetrical relative to the equatorial plane. In an asymmetric tyre an inner region of the tread band is defined, formed by the half of the tread band delimited by the equatorial plane and designed to be facing towards the vehicle when the tyre is mounted on the vehicle, and an outer region of the tread band formed from the half of the tread band axially opposed to the equatorial plane.

The term "groove" means a recess formed in a portion of the tread band, having a width greater than or equal to 1.5 mm, and preferably with a depth greater than 3 mm.

A groove is called "circumferential" when it extends along a circumferential direction or, at most, is slanted by an angle less than 5° respective to the circumferential direction.

A groove is called "transverse" when it extends along a slanted direction respective to the circumferential direction of an acute angle greater than at least 10°.

A groove is called "main" when it has a width greater than 3 mm, preferably greater than 5 mm, while it is called "secondary" when it has a width of less than or equal to 3 mm.

The term "sipe" means a recess formed in a portion of the tread band, having a width of less than 1.5 mm, preferably less than or equal to 1 mm.

The width of sipes and grooves should be measured at a depth greater than or equal to 1 mm, preferably greater than or equal to 1.5 mm.

In the case in which the width of the groove or the sipe varies along its longitudinal extent, the average width is considered, the value of which is obtained as the average of the different width values suitably evaluated according to the relative longitudinal extent. For example, if a groove has a width of 5 mm for 80% of its longitudinal extent and a width of 3 mm for the remaining 20%, the average value of the width to be considered will be equal to 5 x 0.8 + 3 x 0.2 = 4.6 mm.

Similarly, if the width of a groove, in particular of a transverse groove, varies along the tread band depending on the length of the tread to which it belongs, the average value is considered. A groove is defined as being "through" when it opens onto two or more distinct grooves, connecting them. In the case of branched grooves, a through groove has at least two open ends along distinct grooves.

One end of a groove is called "blind" when it does not open onto another groove.

The slant of a transverse groove relative to a circumferential direction identified on the tread band is defined by the acute angle formed by the groove with the circumferential direction. As a special case, a transverse groove extending parallel to the axis of the tyre will have a slant of 90° relative to the circumferential direction.

Two (or more) transverse grooves are slanted "in a concordant manner" when their trend is, for both, increasing or decreasing when they are considered on a Cartesian plane positioned on the tread band (tangentially to the same) with the axis of the ordinates parallel to the circumferential direction and the axis of the abscissas parallel to the axis of the tyre. Consequently, two transverse grooves are slanted "in a discordant manner" when their trend is, when considered on such a Cartesian plane, increasing for one groove and decreasing for the other groove.

A groove is "substantially circumferential" when it extends along the circumferential direction or is inclined relative to an angle of less than 5°.

Two groove sections (or two grooves) are "substantially aligned" when their longitudinal axes, at least at their respective mutually facing ends, are offset by a value lower than their width (in case of portions with different widths, the largest width is considered). Otherwise, two groove sections (or two grooves) are referred to as "misaligned". The misalignment value between two groove portions (or two grooves) is measured as the distance between the respective longitudinal axes.

Two grooves are "adjacent" when they are arranged on the tread surface one after the other, considering the rotation of the tyre in any of the two directions of rotation. In particular, two grooves of the same type are adjacent when no other grooves of that type are provided between them.

By "tread pattern" we mean the overall configuration of the tread band as defined by the set of grooves and blocks that are delimited.

A "module" of the tread pattern is defined by the minimum portion of the tread band whose configuration is repeated in succession along the circumferential extent of the tread band to form said tread pattern.

A module is extended between the axial ends of the tread band. Moreover, while maintaining an identical basic configuration, the modules may have a circumferential dimension (said "pitch") slightly different from one other, for example, on a tread band, modules can be used with two, three or four different pitches, variously combined with one another.

A first group of a predefined type of grooves is called "complementary" to a second group of grooves of the same type when the sum of the grooves from the first and second group embodies the totality of the grooves of that type.

The present invention can have at least one of the further preferred features indicated hereafter.

Preferably, said first group comprises between 5% and 10% of all of said second transverse grooves provided on said tread band.

In this range, performances in terms of noise optimization and road behaviour is further optimised.

Preferably, in each second transverse groove of said second group, said third portion and said second portion are misaligned with each other by less than 25 mm, more preferably by less than 15 mm and even more preferably by less than 10 mm.

In this way, the offset between the two groove sections is encompassed within reduced dimensions, so that the balancing effect is maintained even locally with the first transverse groove.

Preferably, in said second group are identified second transverse grooves having different misalignment offset values between said third portion and said second portion.

Even more preferably, in said second group, the misalignment values between said third portion and said second portion of second transverse grooves are at least three.

In this way, it is achieved that the noise caused by the impact with the road surface of the second and third portions of the second transverse grooves is distributed over a broader frequency spectrum, so as to decrease its overall intensity.

Preferably, each of said third portions of said second transverse grooves comprises a first end, from which said third portion extends from said second portion of said first transverse groove, and wherein said first ends of said third portions of said second transverse grooves are substantially aligned in said circumferential direction.

Preferably, said first angle is between 70° and 90°.

Preferably, said second angle is between 35° and 50°, more preferably between 35° and 45°.

This configuration defines a first transverse groove that, on the one hand, allows a more gradual entry of the first transverse groove into the footprint area, positively influencing the noise aspects of the tyre, and on the other, maintains a sufficiently axial orientation to guarantee excellent performance during acceleration and braking of the tyre.

Moreover, a first transverse groove having these specific characteristic slants allows a tread pattern to be prepared based on a module having a single shoulder block extending along its circumferential extent.

Moreover, this configuration allows for the achievement of a tread pattern with a large number of first transverse grooves in the footprint area of the tyre, in particular at least two first transverse grooves.

Preferably, said third angle is between 65° and 85°, more preferably between 70° and 80°. Preferably, said fourth angle is between 20° and 50°, more preferably between 20° and 40°.

In this way, at the second portion of the first transverse grooves, which has an extent closer to the circumferential direction and which therefore, in the traction phase, tends to determine a more pronounced shifting effect from the circumferential direction, second grooves are provided, having a similar slant but with an opposite sign with respect to said second portion, in order to balance the lateral drift effect.

Preferably, said third angle and said first angle differ, in absolute value, by less than 15°, more preferably by less than or equal to 10°.

Preferably, said fourth angle and said second angle differ, in absolute value, by less than 15°, more preferably by less than or equal to 10°.

In this manner, the first main transverse grooves and the secondary transverse grooves have substantially similar slants but with an opposite sign, being substantially symmetrical with respect to a symmetry line identifiable on the tread band. Thanks to this, the effects of their respective slant are further and effectively counterbalanced.

Preferably, said first transverse grooves have a first, axially external, end, which is open to a lateral edge of said tread band.

Preferably, said first transverse grooves have a second, axially internal, blind end.

This feature avoids the formation, at the second end of the first transverse groove, of blocks with particularly reduced widths, which may not be very rigid and therefore not suitable for counteracting the tangential stresses exerted on the tread band by the vehicle and/or may be easily worn out.

Preferably, said second portion of said first transverse grooves has a decreasing width starting from said first portion up to an axially internal end of said first main transverse grooves. Preferably, said first portion of said first main transverse grooves has a decreasing width starting from an axially external end of said first main transverse grooves up to said second portion.

In this way a channel is formed whose width increases starting from the region closest to the equatorial plane towards the lateral edge of the tread band, so as to facilitate the evacuation of the water from the inside towards the outside of the tread band.

Preferably, said shoulder region is separated from said central region by a circumferential groove intersecting said first transverse grooves.

In this way, the water coming from the central region through the first transverse grooves can be easily evacuated along the circumferential direction. Moreover, the shoulder region is clearly delimited.

Preferably, said first portion of said second transverse grooves intersects said first transverse grooves in said second portion.

Preferably, said first portion of said second transverse grooves opens onto a circumferential groove provided on said tread band.

In this way, the first portion of the second transverse groove can connect the first transverse groove with a circumferential groove, increasing the capacity for rapid evacuation of the water present in the central region of the tread band.

Preferably, each of said first transverse grooves comprises a third portion extending from said second portion towards said equatorial plane which is slanted relative to said circumferential direction by a fifth angle which is smaller of said second angle.

Preferably, said fifth angle is between 10° and 25°.

In this manner, the first transverse grooves can be kept inside the inner region of the tread band even in treads with narrow width.

Preferably, said first portion of said second transverse grooves intersects said first transverse grooves at the said third portion.

Preferably, each of said second transverse grooves comprises a first end from which said first portion of said second transverse groove extends towards said shoulder region and identifies a corresponding first transverse groove in which said second portion of said second transverse groove ends, wherein said first end of each of said second transverse grooves and a first, axially external, end of said corresponding first transverse groove are substantially aligned along an axial direction of said tyre, or, at most, they are offset by a value of less than 20 mm, more preferably less than 10 mm.

In this manner, the second transverse groove is substantially symmetrical to a corresponding first transverse groove with respect to a circumferential direction.

Preferably, said third portion of the second transverse grooves extends between said second portion of a first transverse groove and a connecting portion provided between said first portion and said second portion of an adjacent first transverse groove.

In this manner, between the two adjacent first transverse grooves there may be delimited blocks of suitable size and configuration, preferably with four or five sides.

Preferably, on said tread band a tread pattern is defined, formed by the configuration of grooves and blocks provided on said tread band.

Preferably, on said tread band a module of said tread pattern is also defined, formed by the minimum portion of tread band whose configuration is repeated successively along the circumferential extent of the tread band to form said tread pattern.

Preferably, said module, in said shoulder regions, comprises a single block extended along said circumferential direction.

This feature allows the production of a tread pattern that, while maintaining high performance in terms of road behaviour, also has excellent characteristics in terms of noise. The Applicant has indeed verified that the presence in the module of the tread pattern of two adjacent shoulder blocks along the circumferential development of the tread band proves to be a significant source of noise.

Preferably, on said central region three circumferential grooves are provided which delimit a pair of circumferential ribs, on each of which are provided second main transverse grooves.

In this manner, a region specially configured for driving on wet roads is defined on the central region of the tread band. In this region, in fact, the water present in the central region of the tread band can be rapidly evacuated by means of the circumferential grooves.

Preferably, this region is adjacent to the tread band region on which the first main transverse grooves and secondary transverse grooves are provided.

Preferably, said second main transverse grooves provided on one of said circumferential ribs are substantially aligned with corresponding second main transverse grooves provided on the other of said circumferential ribs.

Preferably, said second main transverse grooves are slanted relative to said circumferential direction by a sixth angle between 60° and 80°.

Preferably, on a shoulder region axially opposed to said first main transverse grooves, a plurality of third main transverse grooves are provided, which are slanted relative to said circumferential direction by a seventh angle between 70° and 90°.

Preferably, said third main transverse grooves are substantially parallel to said first portion of said first main transverse grooves.

Preferably, on the blocks of said central region sipes are provided.

Preferably, said sipes are slanted relative to said circumferential direction in a discordant manner with respect to said first transverse grooves.

In this manner, the axial drift effect caused by the slant in the central region of the first transverse grooves is at least partly balanced by the slant in the opposite direction of the sipes. This enables the achievement of a tyre with particularly balanced behaviour both in traction (in acceleration or braking) and in curve driving.

Preferably, said sipes are parallel to one another at least in one portion of said central region delimited by a pair of circumferential grooves, wherein there is provided said second portion of said first circumferential grooves.

Preferably, said sipes are parallel to one another in the whole central region.

Preferably, said sipes are slanted relative to said circumferential direction by an angle between 65° and 85°, more preferably between 70° and 80°.

This configuration allows the sipes to provide a constant and more significant contribution to the tyre's directionality, contributing effectively to compensate for the slant of the first transverse grooves.

Preferably, said sipes are substantially parallel to said first portion of said second transverse grooves.

Thanks to this feature, the first part of the secondary transverse groove behaves uniformly to the sipes, reinforcing the balancing effect.

Preferably, on the blocks defined on said shoulder region axially opposed to said first transverse grooves, sipes, substantially parallel to said third main transverse grooves, are provided. Preferably, on the blocks defined on said shoulder region from which extends said first transverse grooves, sipes, substantially parallel to said first portion of said first transverse grooves, are provided.

Preferably, in a radially internal position relative to the tread band, a belt structure is provided comprising at least a first radially internal strip, provided with first reinforcing cords parallel to one another and slanted relative to the equatorial plane.

Preferably, said belt structure comprises a second radially external strip, superimposed on the first strip, provided with second reinforcing cords parallel to each other and slanted symmetrically relative to the first cords relative to the equatorial plane.

Preferably, said first transverse grooves are slanted in a concordant manner with said first reinforcing cords.

Preferably, said sipes and/or said second transverse grooves are slanted in a concordant manner with said second reinforcing cords.

This configuration makes it possible to balance any traction imbalance caused by the structure of the belt layers underlying the tread band.

Preferably, said first transverse grooves are main transverse grooves.

In an alternative embodiment, said first transverse grooves are secondary transverse grooves. Preferably, said second transverse grooves are secondary transverse grooves.

In an alternative embodiment, said second transverse grooves are main transverse grooves.

The characteristics and advantages of the invention will become clearer from the detailed description of some of its preferred embodiments, illustrated using a non-limiting example with reference to the accompanying drawings, wherein:
- figure 1 is a front view of a first embodiment of a tyre for vehicle wheels made according to a first aspect of the present invention;
- figure 2 is a schematic enlarged scale view of a significant portion of the tread band of the tyre in figure 1,
- figure 3 is a schematic enlarged scale view of a significant portion of the tread band of a second embodiment of the tyre made according to the first aspect of the present invention,

- figures 4 and 5 are respective representations of the footprint area of the tyre from figure 1 and of a tyre produced according to the prior art,
- figure 6 is a front view of a third embodiment of the tyre made according to a further aspect of the present invention,
- figure 7 is a schematic enlarged scale view of a significant portion of the tread band of the tyre in figure 6.

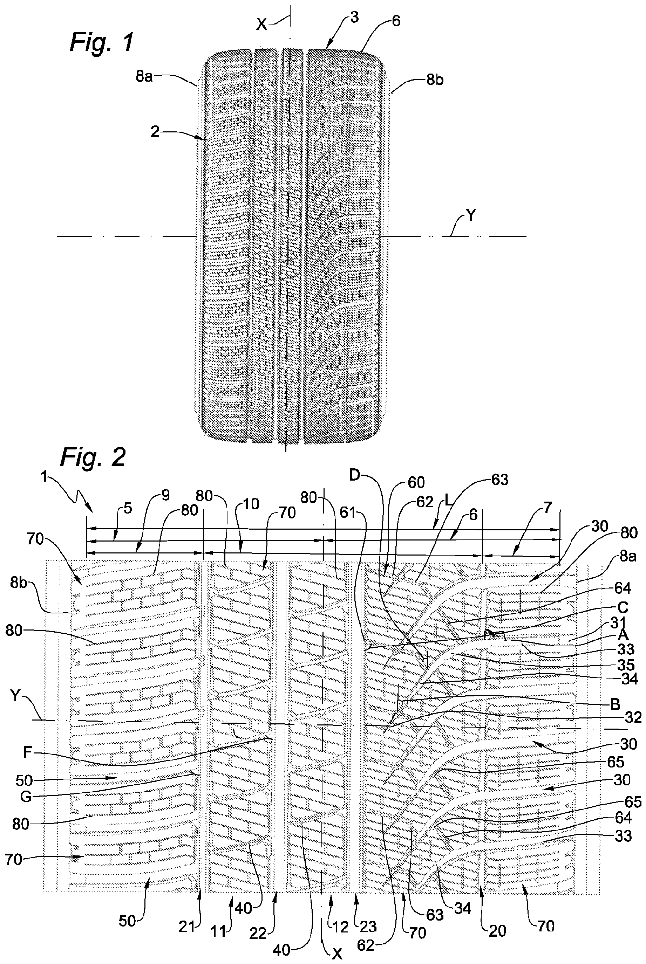

With initial reference to figures 1 and 2, the reference number 1 overall indicates a tyre for vehicle wheels made in accordance with the present invention.

The tyre 1 comprises a conventional tyre surface, not shown in the attached figures, and a tread band 2 on which a tread surface 3 is defined, arranged radially outside the tread band 2 and intended for contact with a road surface.

The tyre 1 embodies a conventional generically toroidal shape extended around a rotational axis, defining on the tread surface 3 an axial direction Y parallel thereto, and traversed by an equatorial plane X, perpendicular to the axis of rotation and defining on the tread surface 3 a circumferential direction parallel thereto.

The tyre 1 is preferably designed to be mounted on a high-performance car and has a nominal section width of approximately 295 mm with a 20-inch diameter.

On the tread band 2 an effective width L is identified, defined as the maximum width of the tread band designed for contact with the ground under standard conditions of use.

The tyre 1 is an asymmetrical tyre in that the equatorial plane X divides the tread band 2 into an outer region 5 of the tread band, designed to face the outside of the vehicle when the tyre is mounted on the vehicle, and into an inner region 6 of the tread band, axially opposite the outer region 5.

On the tread band 2 there is also defined an internal shoulder region 7, extending between a first lateral edge 8a of the tread band 2 and a first circumferential groove 20, as well as an external shoulder region 9, axially opposite the internal shoulder region 7 and extended between a second lateral edge 8b and a second circumferential groove 21.

Between the internal shoulder regions 7 and the external shoulder region 9 a central region 10 is defined, extending between the first circumferential groove 20 and the second circumferential groove 21.

The internal shoulder region 7 is axially extended by a width smaller than the external shoulder region 9, so that the central region 10 is not symmetrical relative to the equatorial plane X. In particular, the internal shoulder region 7 is axially extended by a width equal to about 17% of the effective width L, the external shoulder region 9 is axially extended by a width equal to about 25% of the effective width L, and the central region 10 is axially extended by a width equal to about 58% of the effective width L.

In the central region 10 of the tread band 2 a third and a fourth circumferential groove are also provided, indicated with 22 and 23 respectively, which define a pair of circumferential ribs 11 and 12, of substantially equal width.

The first circumferential groove 20 has a constant width of about 3.5 mm and a depth of about 6.5 mm, the second circumferential groove 21 has a constant width of about 10 mm and a depth of about 8 mm, while the third and fourth circumferential grooves 22 and 23 have a constant width of about 12.5 mm and a depth of about 8.5 mm.

In this embodiment, all the circumferential grooves are therefore main grooves.

On the internal and external shoulder regions 7, 9 and on the central region 10 of the tread band 2, respective pluralities of main transverse grooves are also provided, in particular a plurality of first main transverse grooves 30, extending between the internal shoulder region 7 and central region 10, a plurality of second main transverse grooves 40, extending into the circumferential ribs 11 and 12 of the central region 10 and a plurality of third main transverse grooves 50 extending into the external shoulder region 9.

All the main transverse grooves 30, 40 and 50 are slanted relative to the circumferential direction in a concordant manner with one another, as is clearly visible in figure 2, where they are all slanted in an increasing manner starting from the second lateral edge 8b (in figure 2 represented by the left side of the tread band 2) up to the first lateral edge 8a (in figure 2 represented by the right side of the tread band 2).

The first main transverse grooves 30 extend from a first, axially external, end 31, open to a first lateral edge 8a of the tread band 2 up to a second, axially internal, blind end 32, facing the equatorial plane X, crossing the internal shoulder region 7 and ending in the central region 10 near the fourth circumferential groove 23, without, however, opening into the same.

Each first main transverse groove 30 comprises a first portion 33, extending from the first end 31 through the internal shoulder region 7, and a second portion 34, extending into the central region 10 and connected continuously to the first portion 33.

The first portion 33, substantially straight, is slanted relative to a circumferential direction by a first angle A of about 85°, while the second portion 34, also substantially straight, is slanted relative to said circumferential direction by a second angle B of about 37° and joined to the first portion 33 using a curved connecting portion 35.

The first main transverse grooves 30 have a depth of about 7.5 mm, with a variable width along their extension.

In particular, the first portion 33 of each first main transverse groove 30 has a constant width within a first main transverse groove, comprising between a minimum value of about 6 mm and a maximum value of about 11 mm, according to the pitch of the specific module to which said first main transverse groove belongs, while the second portion 34 has a decreasing width starting from the first portion 33 up to the second end 32, with an average value of about 3.5-4.5 mm.

In the preferred embodiment described herein, the first transverse grooves 30 therefore qualify as main grooves; however, in alternative embodiments, they may be designed as secondary grooves.

In the central region 10 of a tread band 2, in particular in the inner region 6 of the latter, there is also provided a plurality of second transverse grooves 60, intersecting the first main transverse grooves 30.

Each second transverse groove 60 comprises a first portion 62, extending from a first, axially internal, end 61, which opens onto a fourth circumferential groove 23, towards the inner shoulder region 7 and a second portion 63, extending as a continuation of first portion 62 which ends in the second portion 34 of a first main transverse groove 30.

The first main transverse groove 30, wherein the second portion 63 of a second transverse groove 60 ends, is defined as the corresponding first main transverse groove of the second transverse groove 60.

Each second transverse groove 60 also comprises a third portion 64, extending from the second portion 34 of the corresponding first main transverse groove, on the side opposite the second portions 63.

Each second transverse groove 60 is slanted relative to the circumferential direction in a discordant manner respective to the first main transverse grooves, as is clearly visible in figure 2, where they are all slanted in decreasing manner starting from the fourth circumferential groove 23 and continuing towards the internal shoulder region 7.

All portions of the secondary transverse groove have a substantially constant width of about 2.5 mm and a depth of about 7 mm, qualifying the second transverse groove as a secondary transverse groove. In alternative embodiments, the second transverse grooves may be designed as main grooves.

The first portion 62, substantially straight, of each second transverse groove 60 is slanted relative to the circumferential direction by a third angle C measuring about 75°, while the second portion 63, also substantially straight, is slanted relative to the circumferential direction by a fourth angle D measuring about 30°.

The third angle C and the first angle A, despite having an opposite sign, differ in absolute value by about 10°, like the second angle B and the fourth angle D.

The first portion 62 of each second transverse groove 60 intersects the second portion 34 of a first main transverse groove 30 adjacent to the first corresponding main transverse groove.

In each second transverse groove 60, the third portion 64 is substantially parallel to the second portion 63 and extends starting from an end 65, opening into the second portion of the corresponding first main transverse groove 30, to flow into a connecting portion 35 of a first main transverse groove 30 adjacent to the corresponding first main transverse groove 30, opposite to the first main transverse groove 30 intersected by the first portion 62.

Overall, therefore, each secondary transverse groove 60 involves three first main transverse grooves 30, one intersected by the first portion 62, one (the corresponding first main transverse groove) in which the second portion 63 ends and which the third portion 64 exits, and finally one in which the third portion 64 ends.

The ends 65 of the third portions of the secondary transverse grooves 60 are substantially aligned along the circumferential direction.

Moreover, an end 61 of each secondary transverse groove 60 is substantially aligned along the axial direction Y, or, at most, is axially offset by a maximum amount of 20 mm, with respect to the end 31 of the first corresponding main transverse groove 30.

In a secondary transverse groove 60 the third portion 64 can be substantially aligned with the respective second portion 63, or not.

In particular, a first group of secondary transverse grooves 60, representing a portion equal to about 8-10% of all the secondary transverse grooves 60 provided on the tread band 2, shows a substantial alignment between the second portion 63 and the third portion 64, while a second group, formed by all the remaining secondary transverse grooves 60, shows a misalignment between the second portion 63 and the third portion 64.

In the secondary transverse grooves 60 of the second group, the misalignment value between the second and third portions varies from groove to groove, but is still less than 25 mm. Moreover, these misalignment values between the second and third portions are at least three, comprised between 3 mm to 25 mm.

The second main transverse grooves 40 extend through the respective pairs of circumferential grooves, which delimit the circumferential ribs 11 and 12.

Each second main transverse groove 40 provided on the circumferential rib 11 is substantially aligned with a corresponding second main transverse groove 40 provided on the circumferential rib 12, and is slanted relative to the circumferential direction by a sixth angle F of about 70°. The second main transverse grooves 40 have a variable width between about 3.5 mm and about 5 mm with an average value of about 4-4.5 mm and a depth of about 7.5 mm.

The third main transverse grooves 50 extend passing through the external shoulder region 9 and are slanted relative to the circumferential direction by a seventh angle G of about 85°, so as to be substantially parallel to the first portion 33 of the first main transverse grooves 30.

The transverse and circumferential grooves described above delimit a corresponding plurality of blocks of the tread band 2, all identified with 70.

On each block 70, at least one sipe 80 is provided, which can be configured in any suitable manner. In particular, in the present embodiment, the sipes 80 are extended in a straight manner and, inside each block 70, the sipes are substantially parallel and equally spaced from one another.

In the internal and external shoulder regions 7 and 9, the sipes are moreover extended substantially parallel to the direction of the first portion 33 of the first main transverse grooves 30 and of the third main transverse grooves 50, respectively.

In the central region 10, on the other hand, all the sipes 80 are slanted respective to the circumferential direction in a discordant manner relative to the main transverse grooves. In particular, in a central region 10, the sipes 80 are parallel to the first portion 62 of the secondary transverse grooves 60 and thus are slanted relative to the circumferential direction by an angle equal to about 75°.

The set of blocks and of transverse and circumferential grooves defines the tread pattern of the tyre.

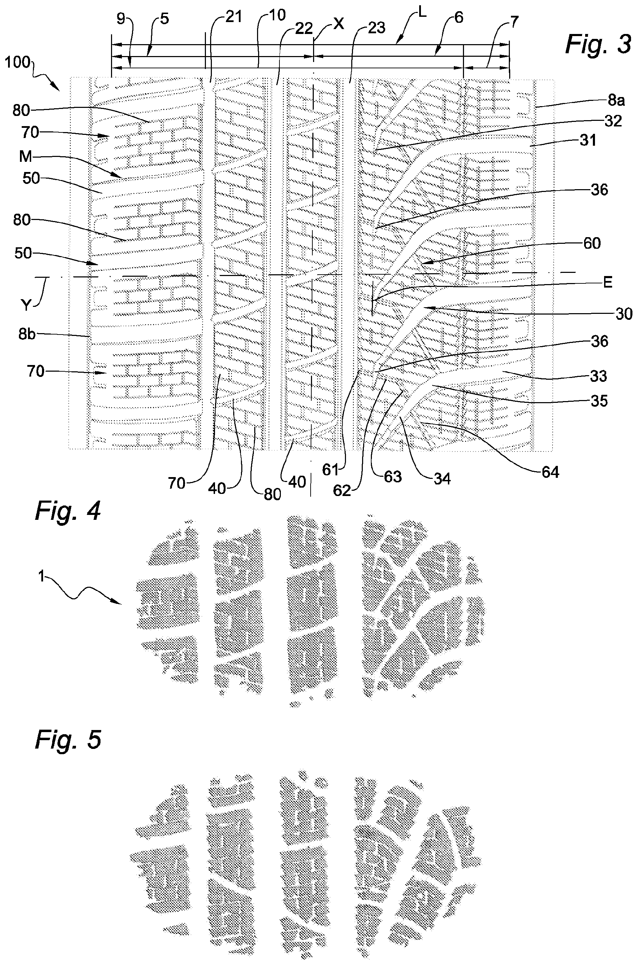

This pattern is formed by the repetition in succession along the circumferential development of the tread band 2 of a module M, which for reasons of clarity is shown only in figure 3, but which is also easily identifiable even on the tread band of figure 2.

The module M comprises, in the internal and external shoulder regions 7 and 9, a single block extending along the circumferential direction.

In the embodiment described herein, the circumferential dimension of the module M, i.e. its pitch, can assume three values, and modules with different pitches are variously combined along the circumferential extent of the tread band 2.

In figure 3 is illustrated a second embodiment of the tyre, generally indicated with 100, made in accordance with this invention.

The tyre 100 has a width of the nominal section that is less than that of tyre 1, for example about 245 mm with a diameter of 20 inches.

This feature leads to a general reduction in the widths of the shoulder regions 7 and 9, of a central region 10, as well as the first circumferential groove 20 (which becomes a secondary circumferential groove) and the second circumferential groove 21.

Moreover, in each first main transverse groove 30 is defined a third portion 36 extending from the second portion 34 towards the second end 32. This third portion 36 is slanted respective to the circumferential direction by a fifth angle E of about 15°.

In this second embodiment, the first portion 62 of the second transverse grooves 60 intersects the first main transverse grooves 30 at the third portion 36.

The remaining characteristics of the tyre 100 are completely analogous to those of tyre 1 from the previous embodiment.

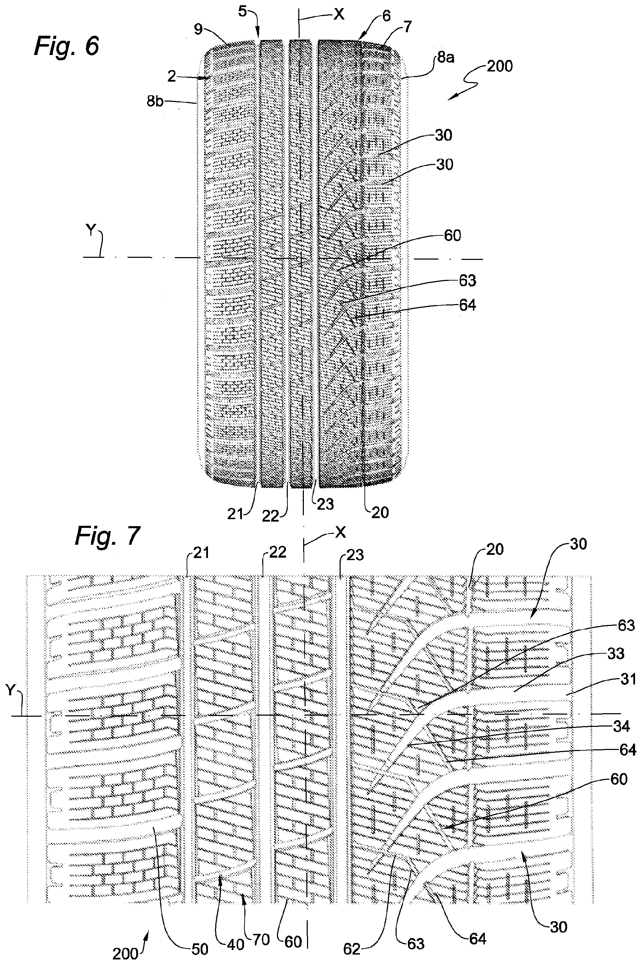

A third embodiment of the tyre is shown in figures 6 and 7, generally indicated with 200, made according to a further aspect of the present invention.

Tyre 200 is analogous to tyre 1 from the preferred embodiment described above and differs from the latter in that all the second transverse grooves 60 have respective second and third portions 63 and 64 that are substantially aligned.

### EXAMPLE

The Applicant has compared a tyre made according to the invention, according to the first preferred embodiment described above referring to figures 1 and 2 ("invention") with a similarly sized tyre made substantially according to patent EP 2095976, in the name of the same Applicant ("comparison").

The Applicant has therefore carried out a series of tests according to recognised international standards on different driving surfaces in order to measure some characteristic parameters. The test results are summarised in the following table 1, in which the values of the parameters are expressed in percentages by setting the values related to the comparison tyre equal to 100.

**Table 1**

| | Comparison | Invention |
|---|---|---|
| Traction on snowy ground | 100 | 104 |
| Sudden change of direction on dry ground (change lane) | 100 | 105 |
| Behaviour on snowy ground | 100 | 105 |
| Behaviour on wet surfaces | 100 | 104 |

The tests have therefore shown that the tyre in the invention presents a substantial and relevant improvement in traction, in sudden change of direction and in road behaviour, in general on any type of road surface.

This improved road behaviour should be attributed, at least in large part, to the features of the object of the present invention and is reflected in the examination of figures 4 and 5, wherein the respective footprint areas of the tyre in the invention and of the comparison tyre are illustrated.

In fact, it is shown in the footprint area on the tyre in the invention that the slant of the main transverse grooves is counterbalanced by the opposite slant of the second transverse grooves. Moreover, in the footprint area of the tyre in the invention there is a larger number of first main grooves, which, however, having a more axial orientation, improves the performance during traction.

The Applicant also compared the two tyres in an anechoic chamber, in order to measure their performance in terms of noise. In the test the tyres were mounted on a high-performance car and the noise was measured according to speed with a microphone placed inside the car and two microphones placed outside the same in different positions.

The test results showed that the tyre in the invention presents substantial noise reduction, at each speed measured both inside and outside the vehicle. In particular, at speeds of 150 km/h, 130 km/h, 100 km/h and 70 km/h, the noise inside the vehicle is reduced by a value ranging from 3 to 5 decibels and outside the vehicle by a value ranging from 2 to 4 decibels.

## Claims

1. Tyre for vehicle wheels, comprising a tread band (2), on which there are defined:
- a pair of axially opposite shoulder regions (7, 9);
- a central region (10) interposed between said shoulder regions;
- a plurality of first transverse grooves (30) extending one after the other along the circumferential extent of said tread band (2),
- a plurality of second transverse grooves (60) extending one after the other along the circumferential extent of said tread band (2) and slanted in a discordant manner with respect to said first transverse grooves (30), wherein two transverse grooves are slanted "in a discordant manner" when their trend is increasing for one groove and decreasing for the other groove when the grooves are considered on a Cartesian plane positioned on the tread band, tangentially to the same, with the axis of the ordinates parallel to the circumferential direction and the axis of the abscissas parallel to the axis of the tyre;
wherein each of said first transverse grooves (30) comprises:
- a first portion (33) extending from one of said shoulder regions (7) towards an equatorial plane (X) of said tyre, said first portion (33) being slanted relative to said circumferential direction by a first angle (A), and
- a second portion (34) extending into said central region (10) towards said equatorial plane (X) as a continuation of said first portion (33), said second portion (34) being slanted relative to said circumferential direction by a second angle (B) that is smaller than said first angle (A),
wherein each of said second transverse grooves (60) comprises:
- a first portion (62) that extends towards said shoulder region (7) and is slanted relative to said circumferential direction by a third angle (C),
- a second portion (63) that extends from said first portion (62) towards said shoulder region (7) and is slanted relative to said circumferential direction by a fourth angle (D) that is smaller than or equal to said third angle (C) and ends in said second portion (34) of one of said first transverse grooves (30), and also
- a third portion (64) that extends from said second portion (34) of said first transverse groove (30) on the side opposite said second portion (63) of said second transverse groove (60), said third portion (64) and said second portion (63) of said second transverse groove (60) being substantially parallel to one another, and
wherein there are identified:
- a first group of second transverse grooves (60), comprising at most 20% of all of said second transverse grooves provided in said tread band, wherein, in each second transverse groove, said third portion (64) is substantially aligned with said second portion (63) and
- a second group of second transverse grooves (60), which is complementary to said first group and comprises at most 95% of all of said second transverse grooves provided in said tread band, wherein, in each second transverse groove, said third portion (64) is not aligned with said second portion (63),
wherein said equatorial plane (X) divides said tread band (2) into an inner region (6), which is intended to face the vehicle when said tyre is fitted to said vehicle, and an outer region (5), which is different from said inner region (6) and is intended to face the side opposite the vehicle when said tyre is fitted to said vehicle, thus defining an asymmetrical tyre, said first transverse grooves (30) and said second transverse grooves (60) extending within said inner region (6) of said tread band (2).

2. Tyre according to claim 1, wherein said first group comprises between 5% and 10% of all of said second transverse grooves (60) provided in said tread band (2).

3. Tyre according to claim 1 or 2, wherein, in each second transverse groove (60) of said second group, said third portion (64) and said second portion (63) are not aligned with each other by less than 25 mm.

4. Tyre according to any one of the preceding claims, wherein, in said second group, second transverse grooves (60) are identified which have misalignment values between said third portion (64) and said second portion (63) that differ from one another.

5. Tyre according to claim 4, wherein, in said second group, the misalignment values between said third portion (64) and said second portion (63) of said second transverse grooves (60) are at least three.

6. Tyre according to any one of the preceding claims, wherein each of said third portions (64) of said second transverse grooves (60) comprises a first end (65), from which said third portion (64) extends from said second portion (34) of said first transverse groove (30), and wherein said first ends (65) of said third portions (64) of said second transverse grooves (60) are substantially aligned in said circumferential direction.

7. Tyre according to any one of the preceding claims, wherein said third angle (C) and said first angle (A) differ, in absolute value, by less than 15°, and wherein said fourth angle (D) and said second angle (B) differ, in absolute value, by less than 15°.

8. Tyre according to any one of the preceding claims, wherein said first portion (62) of said second transverse grooves (60) intersects said first transverse grooves (30) in said second portion (34).

9. Tyre according to any one of the preceding claims, wherein each of said second transverse grooves (60) comprises a first end (61), from which said first portion (62) of said second transverse groove (60) extends towards said shoulder region (7), and identifies a corresponding first transverse groove (30) in which said second portion (63) of said second transverse groove (60) ends, wherein said first end (61) of each of said second transverse grooves and a first axially external end (31), of said corresponding first transverse groove (30) are substantially aligned along an axial direction of said tyre or, at most, are offset by a value of less than 20 mm.

10. Tyre according to any one of the preceding claims, wherein said third portion (64) of said second transverse grooves (60) extends between said second portion (34) of a first transverse groove (30) and a connecting portion (35) provided between said first portion (33) and said second portion (34) of an adjacent first transverse groove (30).

11. Tyre according to any one of the preceding claims, wherein on said tread band (2) there are defined:
- a tread pattern formed by the configuration of grooves and blocks provided in said tread band (2) and
- a module (M) of said tread pattern, which is formed by the smallest tread band portion, the configuration of which is repeated successively along the circumferential extent of the tread band so as to form said tread pattern,
and wherein said module (M), in said shoulder regions (7, 9), comprises a single block (70) extending in said circumferential direction.

12. Tyre according to any one of the preceding claims, wherein three circumferential grooves (21, 22, 23) that delimit a pair of circumferential ribs (11, 12) are made in said central region (10), second main transverse grooves (40) being provided in each of said circumferential ribs.

13. Tyre according to any one of the preceding claims, wherein sipes (80) are provided in the blocks (70) of said central region (10) and wherein said sipes (80) are slanted relative to said circumferential direction in a discordant manner with respect to said first transverse grooves (30).

14. Tyre according to any one of the preceding claims, wherein said first transverse grooves (30) are main transverse grooves, wherein a groove is called "main" when it has a width greater than 3 mm.

15. Tyre according to any one of the preceding claims, wherein said second transverse grooves (60) are secondary transverse grooves, wherein a groove is called "secondary" when it has a width of less than or equal to 3 mm.

## Patentansprüche

1. Reifen für Fahrzeugräder, umfassend einen Laufflächenring (2), auf welchem definiert sind:
- ein Paar von axial gegenüberliegenden Schulterregionen (7, 9);
- ein Zentralbereich (10), der zwischen den Schulterregionen angeordnet ist;
- eine Vielzahl von ersten querverlaufenden Nuten (30), die sich eine nach der anderen entlang der umlaufenden Erstreckung des Laufflächenrings (2) erstrecken,
- eine Vielzahl von zweiten querverlaufenden Nuten (60), die sich eine nach der anderen entlang der umlaufenden Erstreckung des Laufflächenrings (2) erstrecken und in Bezug auf die ersten querverlaufenden Nuten (30) auf entgegengesetzte Weise schräg stehen wobei zwei querverlaufenden Nuten "auf entgegengesetzte Weise schräg stehen", wenn ihre Neigung für eine Nut zunimmt und für die andere Nut abnimmt, wenn die Nuten auf einer kartesischen Ebene betrachtet werden, die auf dem Laufflächenring tangential zu demselben positioniert ist, wobei die Ordinatenachse parallel zu der Umfangsrichtung verläuft und die Abszissenachse parallel zu der Achse des Reifens;
wobei jede der ersten querverlaufenden Nuten (30) umfasst:
- einen ersten Abschnitt (33), der sich von einer der Schulterregionen (7) zu der Äquatorialebene (X) des Reifens hin erstreckt, wobei der erste Abschnitt (33) relativ zu der Umfangsrichtung in einem ersten Winkel (A) schräg ist, und
- einen zweiten Abschnitt (34), der sich in den Zentralbereich (10) hinein zu der Äquatorialebene (X) hin als eine Fortsetzung des ersten Abschnitts (33) erstreckt, wobei der zweite Abschnitt (34) relativ zu der Umfangsrichtung in einem zweiten Winkel (B) schräg ist, der kleiner ist als der erste Winkel (A),
wobei jede der zweiten querverlaufenden Nuten (60) umfasst:
- einen ersten Abschnitt (62), der sich zu dem Schulterbereich (7) hin erstreckt und relativ zu der Umfangsrichtung in einem dritten Winkel (C) schräg ist,
- einen zweiten Abschnitt (63), der sich von dem ersten Abschnitt (62) zu dem Schulterbereich (7) hin erstreckt und relativ zu der Umfangsrichtung in einem vierten Winkel (D), der kleiner als oder gleich dem dritten Winkel (C) ist, schräg ist und in dem zweiten Abschnitt (34) einer der ersten querverlaufenden Nuten (30) endet, sowie
- einen dritten Abschnitt (64), der sich auf der dem zweiten Abschnitt (63) der zweiten querverlaufenden Nut (60) entgegengesetzten Seite von dem zweiten Abschnitt (34) der ersten querverlaufenden Nut (30) erstreckt, wobei der dritte Abschnitt (64) und der zweite Abschnitt (63) der zweiten querverlaufenden Nut (60) im Wesentlichen parallel zueinander sind, und
wobei
- eine erste Gruppe von zweiten querverlaufenden Nuten (60), die höchstens 20 % aller in dem Laufflächenring vorgesehenen zweiten querverlaufenden Nuten umfasst, wobei in jeder zweiten querverlaufenden Nut der dritte Abschnitt (64) im Wesentlichen mit dem zweiten Abschnitt (63) ausgerichtet ist, und
- eine zweite Gruppe von zweiten querverlaufenden Nuten (60), die zu der ersten Gruppe komplementär ist und höchstens 95 % aller in dem Laufflächenring vorgesehenen zweiten querverlaufenden Nuten umfasst, wobei in jeder zweiten querverlaufenden Nut der dritte Abschnitt (64) nicht mit dem zweiten Abschnitt (63) ausgerichtet ist,
identifiziert sind,
wobei die Äquatorialebene (X) den Laufflächenring (2) in eine innere Region (6), die zum Fahrzeug hin weisen soll, wenn der Reifen an dem Fahrzeug montiert ist, und eine äußere Region (5) unterteilt, die sich von der inneren Region (6) unterscheidet und zu der dem Fahrzeug entgegengesetzten Seite weisen soll, wenn der Reifen an dem Fahrzeug montiert ist, woduch ein asymmetrischer Reifen definiert wird, wobei sich die ersten querverlaufenden Nuten (30) und die zweiten querverlaufenden Nuten (60) innerhalb der inneren Region (6) des Laufflächenrings (2) erstrecken.

2. Reifen nach Anspruch 1, wobei die erste Gruppe zwischen 5 % und 10 % aller in dem Laufflächenring (2) vorgesehenen zweiten querverlaufenden Nuten (60) umfasst.

3. Reifen nach Anspruch 1 oder 2, wobei in jeder zweiten querverlaufende Nut (60) der zweiten Gruppe der dritte Abschnitt (64) und der zweite Abschnitt (63) um weniger als 25 mm nicht miteinander ausgerichtet sind.

4. Reifen nach einem der vorhergehenden Ansprüche, wobei in der zweiten Gruppe zweite querverlaufende Nuten (60) identifiziert sind, die Werte für die Fehlausrichtung zwischen dem dritten Abschnitt (64) und dem zweiten Abschnitt (63) aufweisen, die sich voneinander unterscheiden.

5. Reifen nach Anspruch 4, wobei in der zweiten Gruppe die Werte für die Fehlausrichtung zwischen dem dritten Abschnitt (64) und dem zweiten Abschnitt (63) der zweiten querverlaufenden Nuten (60) zumindest drei sind.

6. Reifen nach einem der vorhergehenden Ansprüche, wobei jeder der dritten Abschnitte (64) der zweiten querverlaufenden Nuten (60) ein erstes Ende (65) umfasst, von welchem sich der dritte Abschnitt (64) von dem zweiten Abschnitt (34) der ersten querverlaufenden Nut (30) erstreckt, und wobei die ersten Enden (65) der dritten Abschnitte (64) der zweiten querverlaufenden Nuten (60) im Wesentlichen in der Umfangsrichtung ausgerichtet sind.

7. Reifen nach einem der vorhergehenden Ansprüche, wobei der dritte Winkel (C) und der erste Winkel (A) sich im absoluten Wert um weniger als 15° unterscheiden, und wobei der vierte Winkel (D) und der zweite Winkel (B) sich im absoluten Wert um weniger als 15° unterscheiden.

8. Reifen nach einem der vorhergehenden Ansprüche, wobei der erste Abschnitt (62) der zweiten querverlaufenden Nuten (60) die ersten querverlaufenden Nuten (30) in dem zweiten Abschnitt (34) schneidet.

9. Reifen nach einem der vorhergehenden Ansprüche, wobei jede der zweiten querverlaufenden Nuten (60) ein erstes Ende (61), von welchem sich der erste Abschnitt (62) der zweiten querverlaufenden Nut (60) zu dem Schulterbereich (7) hin erstreckt, umfasst und eine entsprechende erste querverlaufende Nut (30) identifiziert, in welcher der zweite Abschnitt (63) der zweiten querverlaufenden Nut (60) endet, wobei das erste Ende (61) einer jeden der zweiten querverlaufenden Nuten und ein erstes axial äußeres Ende (31) der entsprechenden ersten querverlaufenden Nut (30) im Wesentlichen entlang einer axialen Richtung des Reifens ausgerichtet oder höchstens um einen Wert von weniger als 20 mm zueinander versetzt sind.

10. Reifen nach einem der vorhergehenden Ansprüche, wobei der dritte Abschnitt (64) der zweiten querverlaufenden Nuten (60) sich zwischen dem zweiten Abschnitt (34) einer ersten querverlaufenden Nut (30) und einem Verbindungsabschnitt (35) erstreckt, der zwischen dem ersten Abschnitt (33) und dem zweiten Abschnitt (34) einer benachbarten ersten querverlaufenden Nut (30) vorgesehen ist.

11. Reifen nach einem der vorhergehenden Ansprüche, wobei an dem Laufflächenring (2) definiert sind:
- ein Laufflächenmuster, das durch die Konfiguration von Nuten und Blöcken gebildet wird, die in dem Laufflächenring (2) vorgesehen sind, und
- ein Modul (M) des Laufflächenmusters, das durch den kleinsten Laufflächenringabschnitt gebildet wird, dessen Konfiguration der Reihe nach entlang der Umlaufserstreckung des Laufflächenrings wiederholt wird, um so das Laufflächenmuster zu bilden,
und wobei das Modul (M) in den Schulterregionen (7, 9) einen einzelnen Block (70) umfasst, der sich in der Umfangsrichtung erstreckt.

12. Reifen nach einem der vorhergehenden Ansprüche, wobei drei umlaufende Nuten (21, 22, 23), die ein Paar von umlaufenden Rippen (11, 12) begrenzen, in dem Zentralbereich (10) hergestellt sind, wobei zweite querverlaufende Hauptnuten (40) in jeder der umlaufenden Rippen vorgesehen sind.

13. Reifen nach einem der vorhergehenden Ansprüche, wobei Lamellen (80) in den Blöcken (70) des Zentralbereichs (10) vorgesehen sind, und wobei die Lamellen (80) relativ zu der Umfangsrichtung in einer entgegengesetzten Weise in Bezug auf die ersten querverlaufenden Nuten (30) schräg sind.

14. Reifen nach einem der vorhergehenden Ansprüche, wobei die ersten querverlaufenden Nuten (30) querverlaufende Hauptnuten sind, wobei eine Nut als "Hauptnut" bezeichnet wird, wenn sie eine Breite von mehr als 3 mm hat.

15. Reifen nach einem der vorhergehenden Ansprüche, wobei die zweiten querverlaufenden Nuten (60) sekundäre querverlaufende Nuten sind, wobei eine Nut als "sekundär" bezeichnet wird, wenn sie eine Breite von weniger als oder gleich 3 mm hat.

## Revendications

1. Pneu pour roues de véhicule, comprenant une bande de roulement (2), sur laquelle sont définies :
- une paire de régions d'épaulement axialement opposées (7, 9) ;
- une région centrale (10) interposée entre lesdites régions d'épaulement ;
- une pluralité de premières rainures transversales (30) s'étendant les unes après les autres le long de l'étendue circonférentielle de ladite bande de roulement (2),
- une pluralité de deuxièmes rainures transversales (60) s'étendant les unes après les autres le long de l'étendue circonférentielle de ladite bande de roulement (2) et inclinées de manière discordante par rapport auxdites premières rainures transversales (30), dans lequel deux rainures transversales sont inclinées « de manière discordante » lorsque leur orientation est croissante pour une rainure et décroissante pour l'autre rainure lorsque les rainures sont considérées sur un plan cartésien positionné sur la bande de roulement, tangentiellement à celle-ci, avec l'axe des ordonnées parallèle à la direction circonférentielle et l'axe des abscisses parallèle à l'axe du pneu ;
dans lequel chacune desdites premières rainures transversales (30) comprend :
- une première partie (33) s'étendant de l'une desdites régions d'épaulement (7) vers un plan équatorial (X) dudit pneu, ladite première partie (33) étant inclinée par rapport à ladite direction circonférentielle selon un premier angle (A), et
- une deuxième partie (34) s'étendant dans ladite région centrale (10) vers ledit plan équatorial (X) en prolongement de ladite première partie (33), ladite deuxième partie (34) étant inclinée par rapport à ladite direction circonférentielle selon un deuxième angle (B) qui est inférieur audit premier angle (A),
dans lequel chacune desdites deuxièmes rainures transversales (60) comprend :
- une première partie (62) qui s'étend vers ladite région d'épaulement (7) et est inclinée par rapport à ladite direction circonférentielle selon un troisième angle (C),
- une deuxième partie (63) qui s'étend de ladite première partie (62) vers ladite région d'épaulement (7) et est inclinée par rapport à ladite direction circonférentielle selon un quatrième angle (D) qui est inférieur ou égal audit troisième angle (C) et se termine dans ladite deuxième partie (34) de l'une desdites premières rainures transversales (30), et également
- une troisième partie (64) qui s'étend depuis ladite deuxième partie (34) de ladite première rainure transversale (30) du côté opposé à ladite deuxième partie (63) de ladite deuxième rainure transversale (60), ladite troisième partie (64) et ladite deuxième partie (63) de ladite deuxième rainure transversale (60) étant sensiblement parallèle l'une à l'autre, et
dans lequel sont identifiés :
- un premier groupe de deuxièmes rainures transversales (60), comprenant au plus 20% de toutes lesdites deuxièmes rainures transversales prévues dans ladite bande de roulement, dans lequel, dans chaque deuxième rainure transversale, ladite troisième partie (64) est sensiblement alignée avec ladite deuxième partie (63), et
- un deuxième groupe de deuxièmes rainures transversales (60), qui est complémentaire audit premier groupe et comprend au plus 95% de toutes lesdites deuxièmes rainures transversales prévues dans ladite bande de roulement, dans lequel, dans chaque deuxième rainure transversale, ladite troisième partie (64) n'est pas alignée avec ladite deuxième partie (63),
dans lequel ledit plan équatorial (X) divise ladite bande de roulement (2) en une région intérieure (6), qui est destinée à faire face au véhicule lorsque ledit pneu est monté sur ledit véhicule, et une région extérieure (5), qui est différente de ladite région intérieure (6) et est destinée à faire face au côté opposé au véhicule lorsque ledit pneu est monté sur ledit véhicule, définissant ainsi un pneu asymétrique, lesdites premières rainures transversales (30) et lesdites deuxièmes rainures transversales (60) s'étendant dans ladite région intérieure (6) de ladite bande de roulement (2).

2. Pneu selon la revendication 1, dans lequel ledit premier groupe comprend entre 5% et 10% de l'ensemble desdites deuxièmes rainures transversales (60) prévues dans ladite bande de roulement (2).

3. Pneu selon la revendication 1 ou 2, dans lequel, dans chaque deuxième rainure transversale (60) dudit deuxième groupe, ladite troisième partie (64) et ladite deuxième partie (63) ne sont pas alignées l'une avec l'autre de moins de 25 mm.

4. Pneu selon l'une quelconque des revendications précédentes, dans lequel, dans ledit deuxième groupe, des deuxièmes rainures transversales (60) sont identifiées, lesquelles ont des valeurs de désalignement entre ladite troisième partie (64) et ladite deuxième partie (63) qui diffèrent l'une de l'autre.

5. Pneu selon la revendication 4, dans lequel, dans ledit deuxième groupe, les valeurs de désalignement entre ladite troisième partie (64) et ladite deuxième partie (63) desdites deuxièmes rainures transversales (60) sont d'au moins trois.

6. Pneu selon l'une quelconque des revendications précédentes, dans lequel chacune desdites troisièmes parties (64) desdites deuxièmes rainures transversales (60) comprend une première extrémité (65), à partir de laquelle ladite troisième partie (64) s'étend depuis ladite deuxième partie (34) de ladite première rainure transversale (30), et dans lequel lesdites premières extrémités (65) desdites troisièmes parties (64) desdites deuxièmes rainures transversales (60) sont sensiblement alignées dans ladite direction circonférentielle.

7. Pneu selon l'une quelconque des revendications précédentes, dans lequel ledit troisième angle (C) et ledit premier angle (A) sont différents, en valeur absolue, de moins de 15°, et dans lequel ledit quatrième angle (D) et ledit deuxième angle (B) sont différents, en valeur absolue, de moins de 15°.

8. Pneu selon l'une quelconque des revendications précédentes, dans lequel ladite première partie (62) desdites deuxièmes rainures transversales (60) coupe lesdites premières rainures transversales (30) dans ladite deuxième partie (34).

9. Pneu selon l'une quelconque des revendications précédentes, dans lequel chacune desdites deuxièmes rainures transversales (60) comprend une première extrémité (61), à partir de laquelle ladite première partie (62) de ladite deuxième rainure transversale (60) s'étend vers ladite région d'épaulement (7), et identifie une première rainure transversale correspondante (30) dans laquelle ladite deuxième partie (63) de ladite deuxième rainure transversale (60) se termine, dans laquelle ladite première extrémité (61) de chacune desdites deuxièmes rainures transversales et une première extrémité axialement externe (31), de ladite première rainure transversale correspondante (30) sont sensiblement alignées selon une direction axiale dudit pneu ou, au maximum, sont décalées d'une valeur inférieure à 20 mm.

10. Pneu selon l'une quelconque des revendications précédentes, dans lequel ladite troisième partie (64) desdites deuxièmes rainures transversales (60) s'étend entre ladite deuxième partie (34) d'une première rainure transversale (30) et une partie de liaison (35) prévue entre ladite première partie (33) et ladite deuxième partie (34) d'une première rainure transversale adjacente (30).

11. Pneu selon l'une quelconque des revendications précédentes, dans lequel sur ladite bande de roulement (2) sont définis :
- une sculpture formée par la configuration de rainures et de blocs prévus dans ladite bande de roulement (2), et
- un module (M) de ladite sculpture, qui est formée par la plus petite partie de bande de roulement, dont la configuration est répétée successivement le long de l'étendue circonférentielle de la bande de roulement de manière à former ladite sculpture,
et dans lequel ledit module (M), dans lesdites régions d'épaulement (7, 9), comprend un seul bloc (70) s'étendant dans ladite direction circonférentielle.

12. Pneu selon l'une quelconque des revendications précédentes, dans lequel trois rainures circonférentielles (21, 22, 23) qui délimitent une paire de nervures circonférentielles (11, 12) sont réalisées dans ladite région centrale (10), des deuxièmes rainures transversales principales (40) étant prévues dans chacune desdites nervures circonférentielles.

13. Pneu selon l'une quelconque des revendications précédentes, dans lequel des lamelles (80) sont prévues dans les blocs (70) de ladite région centrale (10) et dans lequel lesdites lamelles (80) sont inclinées par rapport à ladite direction circonférentielle de manière discordante par rapport auxdites premières rainures transversales (30).

14. Pneu selon l'une quelconque des revendications précédentes, dans lequel lesdites premières rainures transversales (30) sont des rainures transversales principales dans lequel une rainure est dite « principale » lorsqu'elle a une largeur supérieure à 3 mm.

15. Pneu selon l'une quelconque des revendications précédentes, dans lequel lesdites deuxièmes rainures transversales (60) sont des rainures transversales secondaires, dans lequel une rainure est dite « secondaire » lorsqu'elle a une largeur inférieure ou égale à 3 mm.
